# EUROPÄISCHE PATENTSCHRIFT

(11) **EP 1 655 262 B1**
(45) Veröffentlichungstag und Bekanntmachung des Hinweises auf die Patenterteilung: **06.01.2010**
(21) Anmeldenummer: 05021793.4
(22) Anmeldetag: 06.10.2005
(51) Int. Cl.: B66F 9/18

(54) **Lasthaltevorrichtung für Hublader**
Load holding device for lift truck
Dispositif de maintien de charge pour chariot élévateur

(30) Priorität: 13.10.2004 DE 102004049867
(43) Veröffentlichungstag der Anmeldung: 10.05.2006
(73) Patentinhaber: Jungheinrich Aktiengesellschaft, 22047 Hamburg (DE)
(72) Erfinder: Magens, Ernst-Peter, Dr.-Ing., 22949 Ammersbek (DE); Verch, Jonni, Dipl.-Ing., 25485 Langeln (DE); Wille, Jan-Henning, Dipl.-Ing., 81541 München (DE)
(74) Vertreter: Hauck Patent- und Rechtsanwälte

(56) Entgegenhaltungen:
- DE-C1- 19 729 448
- DE-U1- 9 418 354
- GB-A- 2 250 267
- US-A- 2 873 874
- US-A- 2 939 596
- US-A- 4 354 795
- PATENT ABSTRACTS OF JAPAN Bd. 1998, Nr. 03, 27. Februar 1998 (1998-02-27) -& JP 09 301694 A (NIPPON YUSOKI CO LTD), 25. November 1997 (1997-11-25)
- PATENT ABSTRACTS OF JAPAN Bd. 1998, Nr. 01, 30. Januar 1998 (1998-01-30) -& JP 09 249398 A (NISSAN MOTOR CO LTD), 22. September 1997 (1997-09-22)

## Beschreibung

Die Erfindung bezieht sich auf einer Hublader mit einer Lasthaltevorrichtung nach dem Patentanspruch 1.

Hublader weisen zumeist eine sogenannte Lastgabel auf, die wiederum zumeist zur Aufnahme von Paletten ausgelegt ist. Auf den Paletten wird unterschiedlichstes Transportgut abgesetzt. Bei Transportgütern mit hohem Schwerpunkt und niedrigem Gewicht kommt es sehr leicht zum Herabfallen von der Paletten, insbesondere wenn der Hublader über unebenes Gelände und durch Kurven fährt.

Es ist eine Vielzahl von Vorschlägen gemacht worden, um Lasten auf Hubladern zu sichern. Aus DE 94 18 354 U1 oder EP 0 467 210 B1 ist bekannt geworden, unabhängig vom Hub der Lastgabel eine horizontale Platte in vertikaler Richtung anzuheben bzw. abzusenken, um auf das Transportgut von oben zu drücken. Nachteil ist, daß Transportgüter unterschiedlicher Höhe nicht sämtlich festgeklemmt werden können. Zur Lösung dieses Problems ist aus WO 00/214206, GB 02250267 A oder DE 029 29 621 C1 bekannt, segmentierte Lasthalteplatten zu verwenden, welche sich an die unterschiedlichen Höhen des Transportguts anpassen können.

Aus GB 1 278 555 A ist bekannt geworden, Lasthalteelemente in Form von Gitterelementen zu gestalten und diese auf beiden Seiten der Lastaufnahmevorrichtung um eine vertikale Achse zu verschwenken. Aus US 2,560,438 ist bekannt, Arme im unteren Bereich der Gabel schwenkbar so zu lagern, daß sie zu beiden Seiten nach außen von der Last weggeklappt werden können. Dies wird durch je einen Hubzylinder erreicht, der sich am Gabelrücken befindet. Die Last wird durch je ein Rohr festgeklemmt, der am oberen Ende der schwenkbaren Arme angebracht ist und parallel zu den Gabelzinken nach vorne zeigt. Die beschriebenen Lösungen haben den Nachteil, daß die Lasthalteelemente bei der Lastaufnahme seitlich neben der Last relativ viel Raum beanspruchen. Daher ist die Aufnahme von Transportgütern, z.B. aus einer Blocklagerung oder von der Ladefläche eines Lastwagens, nicht möglich.

In der DE 197 29 448 C1, die einen Hublader gemäß dem Oberbegriff des Anspruchs 1 offenbart, ist bei einem Gabelstapler mit einer Lastgabel, die vier Zinken aufweist, eine Verbesserung insoweit vorgesehen. Seitliche Lasthalteelemente sind an den oberen Enden der beiden äußeren Gabelzinken schwenkbar gelagert um eine quer zu Längsachse des Fahrzeugs verlaufende Achse. In der Ruhestellung befinden sich die Lasthalteelemente in einer vertikalen Position parallel zum Hubmast und zeigen nach unten. Nach Aufnahme des Transportgutes werden die Lasthalteelemente hydraulisch um 90° in die Horizontale geklappt, wodurch sie sich parallel zu den Gabelzinken nach vom erstrecken. Die äußeren Zinken können quer zur Fahrzeuglängsrichtung hydraulisch verstellt werden, wodurch es möglich ist, mit Hilfe der Lasthalteelemente das Transportgut seitlich festzuklemmen.

Der Erfindung liegt die Aufgabe zugrunde, einen Hublader mit einer Lasthaltevorrichtung zu schaffen, mit der Transportgüter auf einer oder mehreren Paletten wirksam gesichert werden können. Gleichzeitig soll die Lasthaltevorrichtung nur wenig Raum beanspruchen und nicht speziell auf bestimmte Lasttragvorrichtungen beschränkt sein.

Diese Aufgabe wird durch die Merkmale des Patentanspruchs 1 gelöst.

Beim erfindungsgemäßen Lasthalter sind die Lasthalteelemente ähnlich wie in dem zuletzt beschriebenen Stand der Technik um eine horizontale Achse verschwenkbar. Sie sind jedoch nicht an dem Zinken der Lasttragvorrichtung angebracht, sondern an einer von der Lastgabel unabhängigen Haltekonstruktion oder einem an einem Hubgerüst höhenbeweglich geführten Lastschlitten. Die Haltekonstruktion kann ihrerseits am Chassis des Hubladers befestigt werden, vorzugsweise an der Vorderseite des Chassis. Die Lasthalteelemente und Verstellmittel für diese sind so angebracht und ausgeführt, daß die Lasthalteelemente wahlweise in Ruhestellung nahe an die Außenkontur des Hubladers oder unabhängig von der Position der Lastgabelzinken in Eingriff mit einer Last auf der Lastgabel verfahrbar sind.

Die seitlichen Lasthalteelemente zeigen in ihrer Ausgangsstellung annähernd senkrecht nach unten. Nach der Lastaufnahme werden sie nach außen und nach oben geschwenkt und im Anschluß daran nach innen Richtung Last verschoben, wodurch ein Klammerungseffekt entsteht. Nach dem Zurückschwenken in die Ausgangsposition können die Lasthalteelemente soweit nach innen verschoben werden, daß sie nicht mehr über die Fahrzeugkontur überstehen. Die Lasthalteelemente sind daher nicht nur verschwenkbar gelagert, sondern auch unabhängig von Gabelzinken der Lastgabel seitlich verschiebbar, so daß sie beim Manövrieren des Hubwagens kein Hindernis darstellen. Die Erfindung kann als kompakte, autonome Einheit an unterschiedlichen Fahrzeugen eingesetzt werden. Die Einheit aus Tragrahmen, Lasthalteelementen, Lagermitteln und den Verstellmitteln und gegebenenfalls Haltekonstruktion kann separat gefertigt und montiert und anschließend am Hublader angebracht werden. Die Erfindung erlaubt mithin den Einsatz bei der Aufnahme von Transportgütern aus einer dichten Blocklagerung, z.B. bei der Entladung von Lastfahrzeugen. Die Schwenk- und Verschiebebewegungen können autonom ausgeführt werden. Es ist daher nicht erforderlich, Zinken mitsamt den Lasthaltern zu verschieben, wie das beim beschriebenen Stand der Technik der Fall ist. Ferner bedeutet es einen geringeren Aufwand, die Lasthaltevorrichtung als autonome Einheit auszuführen im Gegensatz zur Kopplung an die Verschiebebewegungen von Gabelzinken.

Eine Haltekonstruktion zur Anbringung der Lasthaltevorrichtung ermöglicht, diese in unterschiedlichen Höhen zu montieren. Daher kann flexibel auf unterschiedliche Lasthöhen reagiert werden.

Nach einer Ausgestaltung der Erfindung wird die Haltekonstruktion von einem Rahmen gebildet, der am Chassis befestigt ist. Die Lasthaltevorrichtung kann so an der Haltekonstruktion angebracht sein, daß sie in ihrer Höhe verstellt werden kann. Besonders bevorzugt ist die Ausbildung des Rahmens mit einem unteren fahrzeugfesten Teil und einem höhenbeweglichen, am unteren Teil geführten oberen Teil, an dem die Lasthaltevorrichtung befestigt ist. Der obere Teil des Rahmens kann mit Hilfe einer ersten Antriebsvorrichtung, beispielsweise eines oder mehrere Hydraulikzylindern in der Höhe verstellt werden. Es versteht sich, daß auch andere Verstellmöglichkeiten vorgesehen sein können einschließlich einer manuellen Verstellung.

Die Lasthalteelemente können, wie das beim zuletzt beschriebenen Stand der Technik der Fall ist, jeweils durch einen eigenen Hydraulikzylinder betätigt werden. Es ist nach einer Ausgestaltung der Erfindung von Vorteil, wenn die Lasthalteelemente an den Enden einer Welle angebracht sind, die drehbar am Tragrahmen gelagert ist. Zur Verdrehung der Welle bedarf es lediglich eines einzelnen Antriebs. Es ist auch denkbar, für jedes Lasthalteelement eine Welle vorzusehen und beide Wellenabschnitte jeweils von einem Antrieb zu verschwenken.

Erfindungsgemäß werden die Lasthalteelemente voneinander fort und aufeinander zu beweglich gelagert. Hierzu sieht eine Ausgestaltung der Erfindung vor, daß an den Enden der Welle verschiebbar, jedoch drehfest Verschiebeelemente geführt sind, die fest mit den Lasthalteelementen verbunden sind. Die Verschiebeelemente können unverdrehbar von hohlen Abschnitten der Welle aufgenommen werden. Zur Betätigung der Verschiebeelemente können wiederum geeignete Antriebsmittel vorgesehen werden, beispielsweise zwei Hydraulikzylinder, die von einer hohlen Welle aufgenommen sind.

Die genannten Antriebe zur Betätigung der Lasthalteelemente können durch geeignete Steuervorkehrungen gesteuert werden. Es ist denkbar, daß der Bediener jede Betätigung einzeln in Gang setzt. Es ist jedoch vorteilhaft, wenn bei der Betätigung der Lasthalteelemente ein vorgegebener Programmablauf durchgeführt wird. Vor dem Einsatz der Lasthalteelemente müssen diese zunächst nach außen gefahren werden, bevor sie nach vom verschwenkt werden können. Ist dies geschehen, muß anschließend eine Bewegung der Lasthalteelemente aufeinander zu erfolgen, damit eine Last eingeklemmt werden kann. Dieser Ablauf kann automatisch vor dem Entladen in umgekehrter Richtung ablaufen. Während der Fahrt ohne Last befinden sich die Lasthalteelemente, die vorzugsweise länglich und flach ausgeführt sind, an einem Ort, an dem sie über die seitliche Fahrzeugkontur nicht überstehen.

Damit einerseits nicht zu hohe Klemmkräfte bei der Sicherung einer Last erzeugt werden, andererseits jedoch ausreichend hohe Klemmkräfte für die Sicherung erzielt werden, kann es von Vorteil sein, wenn für die seitliche Verstellung der Lasthalteelemente ein Sensor vorgesehen ist, der z.B. die Klemmkraft mißt und die Verstellung beendet, wenn ein vorgegebener Wert erreicht worden ist. Ist ein Sensor nicht vorgesehen, kann der Bediener nach Erfahrung die seitliche Verstellbewegung der Lasthalteelemente beenden. Da in vielen Fällen die Transportgüter nicht über den Grundriß einer Palette hinaus aufgenommen sind, ist auch möglich, die seitliche Verstellbewegung wegabhängig zu steuern.

Die Erfindung soll nachfolgend anhand von in Zeichnungen dargestellten Einzelheiten näher erläutert werden:
- Fig. 1: zeigt äußerst schematisch einen Hubwagen mit einer Vorrichtung nach der Erfindung (Schwenkantrieb nicht dargestellt).
- Fig. 2: zeigt in Seitenansicht den oberen Teil der Vorrichtung nach der Erfindung mit einem mittig angeordneten Schwenkantrieb.
- Fig. 3: zeigt einen Schnitt durch die Darstellung nach Fig. 2 entlang der Linie 3-3.
- Fig. 4: zeigt eine weitere Ausgestaltung der Lasthaltevorrichtung mit einem seitlich angeordneten Schwenkantrieb.

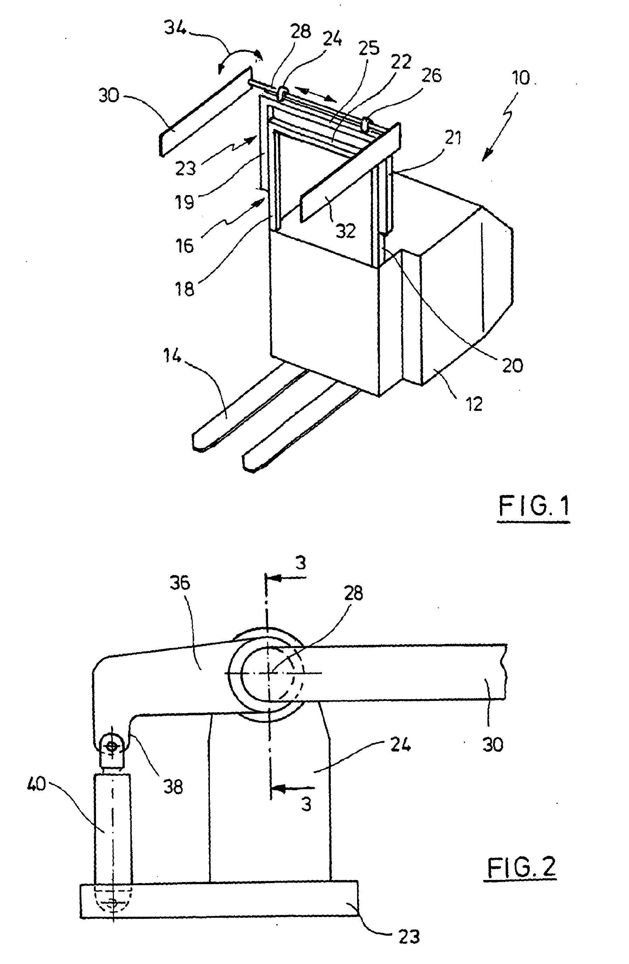

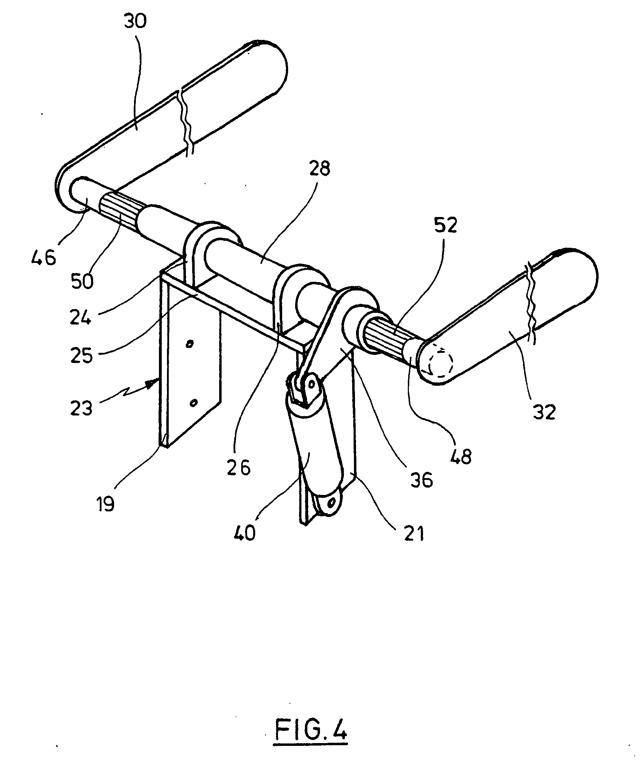

In Fig. 1 ist ein Hublader 10 dargestellt, der ein Chassis 12 aufweist sowie eine Lastgabel 14. Die gezeigten Teile sind sehr schematisch dargestellt. Man erkennt ferner einen rechteckigen, vertikal angeordneten Rahmen 16 mit zwei seitlichen Stützen 18, 20, die an der Vorderseite bzw. seitlich am Chassis 12 angebracht sind. Sie stehen jedoch nach Möglichkeit nicht seitlich über das Chassis 12 über. Die vertikalen Stützen 18, 20 sind am oberen Ende über eine Querstrebe 22 miteinander verbunden. An dem Rahmen 16 ist ein Tragrahmen 23, bestehend aus den Schenkeln 19 und 21 und dem Querträger 25 (siehe auch Fig. 4). Auf dem Querträger 23 sind zwei Lagerböcke 24, 26 angebracht für eine horizontale Welle 28. An den Enden der Welle 28 ist jeweils ein Lasthalteelement 30, 32 angebracht. Mit Hilfe der Welle 28 können die Lasthalteelemente 30, 32 in einer vertikalen Ebene verschwenkt werden. In Fig. 1 ist die Betriebsposition gezeigt, in der sie sich annähernd horizontal nach vom in Richtung der Lastgabel 14 erstrecken. Sie können jedoch vertikal nach unten geschwenkt werden, wie durch Doppelpfeil 34 angedeutet. Sie liegen dann seitlich an den Schenkeln 19, 21 an und stehen nicht seitlich über die Kontur des Flurförderzeugs 10 über.

In Fig. 2 ist der Lagerbock 24 erkennbar, der die Welle 28 lagert. Mit der Welle ist ein Hebel 36 fest verbunden, an dem an einem nach unten stehenden Abschnitt 38 ein Hydraulikzylinder 40 angelenkt ist. Der Hydraulikzylinder 40 ist an dem oberen Querträger 23 angelenkt. In Fig. 2 ist der Hydraulikzylinder 40 eingefahren, so daß sich die in den Fign. 1 und 2 dargestellte Position für die Lasthalteelemente 30, 32 ergibt. Wird der Hydraulikzylinder 40 ausgefahren, werden die Lasthalteelemente 30, 32 nach hinten und unten verschwenkt.

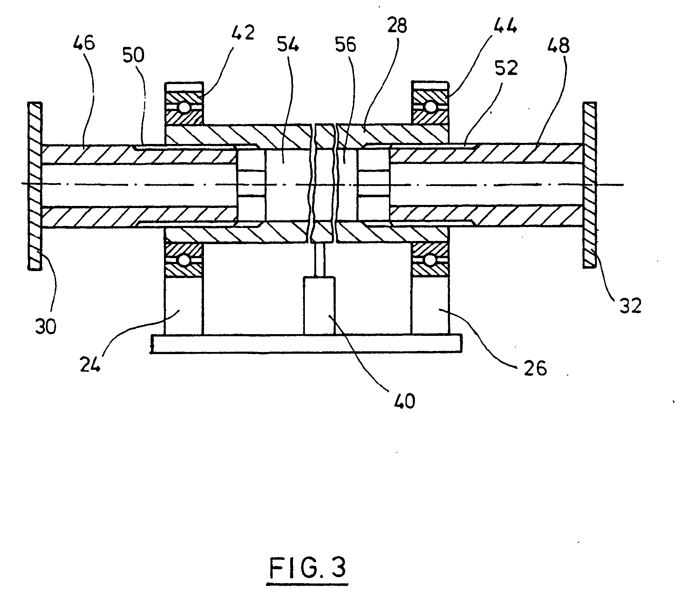

In Fig. 3 ist die Welle 28 stark verkürzt dargestellt. Man erkennt, daß sie im Bereich der Lagerböcke 24, 26 mit Hilfe von Kugellagern 42, 44 drehbar gelagert ist. Es ist ferner zu erkennen, daß die Welle 28 als hohle Welle ausgeführt ist.

An den Enden der Welle 28 sind rohrförmige Abschnitte 46 bzw. 48 annähernd passend innerhalb der Welle 28 angeordnet, wobei sie jedoch mit Hilfe von bei 50 bzw. 52 angeordneten Keilen nur axial beweglich, jedoch drehfest mit der Welle 28 gekoppelt sind. Die Lasthalteelemente 30, 32 sind fest mit den Rohrabschnitten 46, 48 verbunden. Innerhalb der Welle 28 sind zwei Hydraulikzylinder 54, 56 angeordnet, welche fest mit den zugekehrten Enden der Rohrabschnitte 46, 48 verbunden sind zwecks Verstellung der Lasthalteelemente 30, 32.

In der Ausgangsstellung sind die Hydraulikzylinder 54, 56 eingefahren und der Hydraulikzylinder 40 ist ausgefahren. Somit zeigen die Lasthalteelemente 30, 32 vertikal nach unten und liegen an den Schenkeln 19, 21 an. Der Bediener kann nun das Transportgut mit der Lastgabel 14 aufnehmen und z.B. mit dem Hubwagen 10 eine kurze Strecke rückwärts fahren. Nunmehr betätigt er die Lastsicherung, wodurch über eine automatische Steuerung folgende drei Vorgänge hintereinander ausgeführt werden:
- Zunächst fahren die Hydraulikzylinder 54, 56 aus, so daß die Lasthalteelemente 30, 32 etwas über die Breite des Transportgutes überstehen.
- Anschließend wird der Hydraulikzylinder 40 eingefahren, und die seitlichen Lasthalteelemente 30, 32 schwenken seitlich neben das Transportgut, wie in Fig. 1 dargestellt.
- Nunmehr werden die Hydraulikzylinder 54, 56 so weit eingefahren, daß die Lasthalteelemente 30, 32 seitlich am Transportgut anliegen. Falls die Einfahrbewegung der Lasthalteelemente durch eine automatische Steuerung bewerkstelligt wird, kann die Verstellung auch dadurch beendet werden, daß der Druck, mit dem die Lasthalteelemente auf das Transportgut wirken, ermittelt wird, und zwar mit Hilfe eines geeigneten Sensors. Dadurch wird vermieden, daß das Transportgut zu stark eingeklemmt wird bzw. die Lasthalteelemente überlastet werden.

Es versteht sich, daß auf eine automatische Steuerung auch verzichtet werden kann. Der Bediener hat dann jeden der drei genannten Vorgänge manuell auszuführen. Bei Verwendung hydraulischer Antriebe für die Verschwenk- und Verschiebebewegung kann z.B. mit Hilfe eines Tasters ein Ventil betätigt werden, das mit dem zugehörigen Hydraulikzylinder verbunden ist und so lange geöffnet bleibt, bis der Bediener den Taster losläßt.

Anstelle einer den Druck der Lasthalteelemente sensierenden Steuerung zur Beendigung der Einfahrbewegung kann auch ein einstellbarer Betätigungsweg vorgesehen werden.

Die drei Vorgänge für die Ladungssicherung können in Abhängigkeit vom Ladezustand und der Fahrzeuggeschwindigkeit automatisch ausgeführt werden. Z.B. kann bei einem beladenen Fahrzeug und hoher Fahrgeschwindigkeit die Ladungssicherung ausgelöst werden. Alternativ kann bei einem beladenen Fahrzeug und nicht ausgelöster Ladungssicherung die Fahrgeschwindigkeit des Fahrzeugs automatisch herabgesetzt werden.

Während des Transports ist das Transportgut gegen seitliches Herabfallen von der Lastgabel gesichert. Im Abstand zum Absetzpunkt betätigt der Bediener die beschriebene Lastsicherung, wodurch automatisch die oben beschriebenen drei Vorgänge in umgekehrter Reihenfolge ausgeführt werden. Auch hier kann naturgemäß eine manuelle Bedienung stattfinden.

Figur 1 bezieht sich auf einen Hubwagen. Es versteht sich, dass die Erfindung auch auf einen Stapler angewendet werden kann, bei dem die Lastgabel entlang eines Hubgerüstes in der Höhe verstellt werden kann. Bei derartigen Ausführungen sind die Gabelzinken zumeist über einen Lastschlitten gehängt, der höhenbeweglich am Hubgerüst geführt ist. Die erfindungsgemäße Einheit aus Lasthalteelementen, Lagermitteln und Verstellmitteln kann auch am Lastschlitten angebracht sein. Dies ist in den Figuren nicht dargestellt. Es ist zum Beispiel denkbar, die Lagerböcke 24, 26 und die Welle 28, wie sie in Figur 1 dargestellt sind, mit Hilfe des Tragrahmens 23 an einem Lastschlitten anzubringen. Dadurch ist es möglich, bei in der Höhe zu verstellender Last unabhängig von der Hubhöhe eine Lastsicherung zu erzielen.

Für die Anbringung an einem Lastschlitten ist eine Ausführung der Lasthaltevorrichtung mit seitlich angeordnetem Schwenkantrieb gemäß Fig. 4 besser geeignet.

## Patentansprüche

1. Hublader mit einer Lasthaltevorrichtung, mit einem länglichen Lasthalteelement (30, 32) auf jeder Seite einer Lastgabel (14), die oberhalb der Lastgabel (14) um eine horizontale Achse quer zur Achse des Hubladers (10) schwenkbar gelagert sind und Verstellmitteln zum Verschwenken der Lasthalteelemente (30, 32) und Verstellung aufeinander zu und voneinander fort, **dadurch gekennzeichnet, daß** eine Einheit aus Tragrahmen (23), Lasthalteelementen (30, 32), Lagermitteln (24, 26) für die Lasthalteelemente (30, 32) und den Verstellmitteln entweder an einer von der Lastgabel (14) unabhängigen Haltekonstruktion oder an einem Lastschlitten für die Lastgabel fest angebracht ist und die Lasthalteelemente (30, 32) und die Verstellmittel so ausgeführt sind, daß die Lasthalteelemente (30, 32) wahlweise nahe an die Außenkontur des Hubladers (10) oder unabhängig von der Position der Lastgabelzinken in Eingriff mit einer Last auf der Lastgabel (14) verfahrbar sind.

2. Hublader mit einer Lasthaltevorrichtung nach Anspruch 1, **dadurch gekennzeichnet, daß** der Tragrahmen (23) eine obere Querstrebe (25) aufweist, an der die Lasthalteelemente (30, 32) und die Verstellmittel gelagert sind.

3. Hublader mit einer Lasthaltevorrichtung nach Anspruch 1, **dadurch gekennzeichnet, daß** die Haltekonstruktion im Bereich der Vorderseite des Chassis (12) angeordnet ist.

4. Hublader mit einer Lasthaltevorrichtung nach Anspruch 1 oder 2, **dadurch gekennzeichnet, daß** die Haltekonstruktion von einem Rahmen (16) gebildet ist, der am Chassis (12) befestigt ist.

5. Hublader mit einer Lasthaltevorrichtung nach einem der Ansprüche 1 bis 4, **dadurch gekennzeichnet, daß** die Einheit so an der Haltekonstruktion oder dem Lastschlitten angebracht sind, daß sie in der Höhe verstellt werden können.

6. Hublader mit einer Lasthaltevorrichtung nach Anspruch 4 oder 5, **dadurch gekennzeichnet, daß** der Rahmen (16) einen unteren fahrzeugfesten Teil und einen höhenbeweglichen an dem unteren Teil vertikal geführten oberen Teil aufweist und die Lasthalteelemente und die Verstellmittel am oberen Teil angebracht sind.

7. Hublader mit einer Lasthaltevorrichtung nach Anspruch 6, **dadurch gekennzeichnet, daß** der obere Rahmenteil von einer ersten Antriebsvorrichtung angetrieben ist.

8. Hublader mit einer Lasthaltevorrichtung nach einem der Ansprüche 1 bis 7, **dadurch gekennzeichnet, daß** die Lasthalteelemente (30, 32) an den Enden einer Welle (28) angebracht sind, die drehbar an der Haltekonstruktion oder dem Lastschlitten gelagert ist.

9. Hublader mit einer Lasthaltevorrichtung nach Anspruch 8, **dadurch gekennzeichnet, daß** in der Einheit eine zweite Antriebsvorrichtung zwecks Drehung der Welle (28) vorgesehen ist.

10. Hublader mit einer Lasthaltevorrichtung nach Anspruch 9, **dadurch gekennzeichnet, daß** der zweite Antrieb einen Hydraulikzylinder (40) aufweist, der an einem Hebel (36) angreift, der drehfest mit der Welle (28) verbunden ist.

11. Hublader mit einer Lasthaltevorrichtung nach einem der Ansprüche 8 bis 10, **dadurch gekennzeichnet, daß** an den Enden der Welle (28) verschiebbar aber drehfest Verschiebeelemente geführt sind, die fest mit den Lasthalteelementen (30, 32) verbunden sind.

12. Hublader mit einer Lasthaltevorrichtung nach Anspruch 11, **dadurch gekennzeichnet, daß** die Verschiebeelemente Verschiebestangen (46, 48) sind, die unverdrehbar in der hohlen Welle (28) aufgenommen sind.

13. Hublader mit einer Lasthaltevorrichtung nach Anspruch 11 oder 12, **dadurch gekennzeichnet, daß** die Verschiebeelemente von Hydraulikzylindern oder einem elektrischen Antrieb betätigbar sind.

14. Hublader mit einer Lasthaltevorrichtung nach Anspruch 12 und 13, **dadurch gekennzeichnet, daß** in der Hohlwelle (28) zwei Hydraulikzylinder (54, 56) aufgenommen sind zur Betätigung der Verschiebestange (46, 48).

15. Hublader mit einer Lasthaltevorrichtung nach einem der Ansprüche 1 bis 14, **dadurch gekennzeichnet, daß** die Lasthalteelemente (30, 32) länglich und flach geformt sind.

16. Hublader mit einer Lasthaltevorrichtung nach einem der Ansprüche 1 bis 15, **dadurch gekennzeichnet, daß** eine Steuervorrichtung für die Antriebe der Lasthalteelemente (30, 32) vorgesehen ist.

17. Hublader mit einer Lasthaltevorrichtung nach Anspruch 16, **dadurch gekennzeichnet, daß** die Steuervorrichtung ein vorgegebenes Programm aufweist für die automatische Verstellung der Lasthaltelemente (30, 32) vor dem Beladen, nach dem Beladen sowie nach dem Entladen.

18. Hublader mit einer Lasthaltevorrichtung nach einem der Ansprüche 1 bis 17, **dadurch gekennzeichnet, daß** ein Sensor vorgesehen ist für die Detektion des Kontakts zwischen einer Last auf der Lastgabel (14) und den Lasthalteelementen (30, 32) und Erzeugung eines Signals auf die Steuervorrichtung zur Beendigung der Verstellung der Lasthalteelemente (30, 32) nach Kontakt mit der Last.

19. Hublader mit einer Lasthaltevorrichtung nach Anspruch 18, **dadurch gekennzeichnet, daß** ein Kraftsensor zur Messung der Kraft an den Lasthalteelementen (30, 32) vorgesehen ist.

20. Hublader mit einer Lasthaltevorrichtung nach einem der Ansprüche 16 bis 19, **dadurch gekennzeichnet, daß** die Steuervorrichtung für Betätigung der Lasthalteelemente (30, 32) bei aufgenommener Last und Überschreitung einer vorgegebenen Fahrgeschwindigkeit ausgelegt ist.

21. Hublader mit einer Lasthaltevorrichtung nach einem der Ansprüche 16 bis 20, **dadurch gekennzeichnet, daß** die Steuervorrichtung für die Begrenzung der Fahrgeschwindigkeit bei aufgenommener Last auf einen Höchstwert und Nichtbetätigung der Lasthalteelemente ausgelegt ist.

## Claims

1. A lift truck having a load holding device, with a longitudinal load holding element (30, 32) on each side of a load fork (14), the load holding elements (30, 32) being pivotally mounted above the load fork (14) around a horizontal axis transversely to the axis of the lift truck (10), and with adjustment means for swivelling the load holding elements (30, 32) and for adjustment towards each other and away from each other, **characterised in that** an unit consisting of a support frame (23), load holding elements (30, 32), bearing means (24, 26) for the load holding elements (30, 32) and of the adjustment means is fixedly attached to either a holding construction that is independent from the load fork (14) or to a load sledge for the load fork, and that the load holding elements (30, 32) and the adjustment means are realised such that the load holding elements (30, 32) are adapted to be selectively traversed near to the outer contour of the lift truck (10) or, independently from the position of the load fork prongs, into engagement with a load on the load fork (14).

2. A lift truck having a load holding device according to claim 1, **characterised in that** the support frame (23) has an upper cross strut (25) on which the load holding elements (30, 32) and the adjustment means are mounted.

3. A lift truck having a load holding device according to claim 1, **characterised in that** the holding construction is arranged in the region of the front side of the chassis (12).

4. A lift truck having a load holding device according to claim 1 or 2, **characterised in that** the holding construction is formed by a frame (16) that is fastened on the chassis (12).

5. A lift truck having a load holding device according to any one of claims 1 to 5, **characterised in that** the unit is attached to the holding construction or the load sledge such that it can be adjusted in the height.

6. A lift truck having a load holding device according to claim 4 or 5, **characterised in that** the frame (16) has a lower vehicle stationary part and a height movable upper part, guided vertically on the lower part, and that the load holding elements and the adjustment means are mounted on the upper part.

7. A lift truck having a load holding device according to claim 6, **characterised in that** the upper frame part is driven by a first driving device.

8. A lift truck having a load holding device according to any one of claims 1 to 7, **characterised in that** the load holding elements (30, 32) are attached on the ends of a shaft (28) which is rotatably mounted on the holding construction or the load sledge.

9. A lift truck having a load holding device according to claim 8, **characterised in that** a second driving device is provided in the unit in order to rotate the shaft (28).

10. A lift truck having a load holding device according to claim 9, **characterised in that** the second drive has a hydraulic cylinder (40), which engages on a lever (36) which is connected to the shaft (28) in a manner secured against rotation.

11. A lift truck having a load holding device according to any one of claims 8 to 10, **characterised in that** on the end of the shaft (28), shifting elements are guided shiftably but in a manner secured against rotation, and are fixedly connected to the load holding elements (30, 32).

12. A lift truck having a load holding device according to claim 11, **characterised in that** the shifting elements are shifting rods (46, 48), which are accommodated in the hollow shaft (28) so as to be fixed against rotation.

13. A lift truck having a load holding device according to claim 11 or 12, **characterised in that** the shifting elements are adapted to be actuated by hydraulic cylinders or by an electric drive.

14. A lift truck having a load holding device according to claim 12 and 13, **characterised in that** two hydraulic cylinders (54, 56) are accommodated in the hollow shaft (28) in order to actuate the shifting rod (46, 48).

15. A lift truck having a load holding device according to any one of claims 1 to 14, **characterised in that** the load holding elements (30, 32) are formed to be oblong and flat.

16. A lift truck having a load holding device according to any one of claims 1 to 15, **characterised in that** a control device is provide for the drives of the load holding elements (30, 32).

17. A lift truck having a load holding device according to claim 16, **characterised in that** the control device features a given program for the automatic adjustment of the load holding elements (30, 32) before loading, after loading as well as after unloading.

18. A lift truck having a load holding device according to any one of claims 1 to 17, **characterised in that** a sensor is provided in order to detect the contact between a load on the load fork (14) and the load holding elements (30, 32) and to generate a signal for the control device to end the adjustment of the load holding elements (30, 32) after the contact with the load.

19. A lift truck having a load holding device according to claim 18, **characterised in that** a force sensor is provided for measuring the force on the load holding elements (30, 32).

20. A lift truck having a load holding device according to any one of claims 16 to 19, **characterised in that** the control device is designed for the actuation of the load holding elements (30, 32) when the load is taken up and a given travel speed is exceeded at the same time.

21. A lift truck having a load holding device according to any one of claims 16 to 20, **characterised in that** the control device is designed for limiting the travel speed to a maximum value when the load is taken up and the load holding elements are not actuated.

## Revendications

1. Chariot élévateur avec un dispositif de maintien de charge, avec un élément de maintien de charge allongé (30, 32) dans chaque côté d'une fourche de charge (14), les éléments de maintien de charge (30, 32) étant monté de façon pivotante autour d'un axe horizontal en travers de l'axe du chariot élévateur (10) au-dessus de la fourche de charge (14), et avec des moyens d'ajustage pour pivoter les éléments de maintien de charge (30, 32) et pour l'ajustage de l'un envers l'autre et de l'un à part de l'autre, **caractérisé en ce que** une unité consistant en un cadre de support (23), des éléments de maintien de charge (30, 32), des moyens de logement (24, 26) pour les éléments de maintien de charge (30, 32) et les moyens d'ajustage, est fermement attaché soit à une construction de maintien qui est indépendante de la fourche de charge (14) soit sur un glissoir de charge pour la fourche de charge, et que les éléments de maintien de charge (30, 32) et les moyens d'ajustage sont réalisés de sorte que les éléments de maintien de charge (30, 32) sont sélectivement déplaçables vers la proximité du contour extérieur du chariot élévateur (10) ou, indépendamment de la position des dents de la fourche de charge, vers un engagement avec une charge sur la fourche de charge (14).

2. Chariot élévateur avec un dispositif de maintien de charge selon la revendication 1, **caractérisé en ce que** le cadre de support (23) a un renforcement diagonal supérieur (25) sur lequel les éléments de maintien de charge (30, 32) et les moyens d'ajustage sont logés.

3. Chariot élévateur avec un dispositif de maintien de charge selon la revendication 1, **caractérisé en ce que** la construction de maintien est disposée dans la région du côté de front du châssis (12).

4. Chariot élévateur avec un dispositif de maintien de charge selon la revendication 1 ou 2, **caractérisé en ce que** la construction de maintien est formé par un cadre (16) qui est attaché sur le châssis (12).

5. Chariot élévateur avec un dispositif de maintien de charge selon l'une quelconque des revendications 1 à 5, **caractérisé en ce que** les unités sont installées dans la construction de maintien ou dans le glissoir de charge de façon qu'elles peuvent être ajustées dans l'hauteur.

6. Chariot élévateur avec un dispositif de maintien de charge selon la revendication 4 ou 5, **caractérisé en ce que** le cadre (16) a une partie inférieure stationnaire dans le véhicule et une partie supérieure déplaçable dans l'hauteur, guidée verticalement sur la partie inférieure, et que les éléments de maintien de charge et les moyens d'ajustage sont installés sur la partie supérieure.

7. Chariot élévateur avec un dispositif de maintien de charge selon la revendication 6, **caractérisé en ce que** la partie supérieure du cadre est entraînée par un premier dispositif d'entraînement.

8. Chariot élévateur avec un dispositif de maintien de charge selon l'une quelconque des revendications 1 à 7, **caractérisé en ce que** les éléments de maintien de charge (30, 32) sont installés dans les extrémités d'un arbre (28) qui est logé de façon rotative dans la construction de maintien ou dans le glissoir de charge.

9. Chariot élévateur avec un dispositif de maintien de charge selon la revendication 8, **caractérisé en ce que** un deuxième dispositif d'entraînement pour tourner l'arbre (28) est pourvu dans l'unité.

10. Chariot élévateur avec un dispositif de maintien de charge selon la revendication 9, **caractérisé en ce que** le deuxième dispositif d'entraînement présente un cylindre hydraulique (40) qui s'engage dans un levier (36) qui est connecté avec l'arbre (28) de façon sécurisée contre la rotation.

11. Chariot élévateur avec un dispositif de maintien de charge selon l'une quelconque des revendications 8 à 10, **caractérisé en ce que** dans les extrémités de l'arbre (28), des éléments de coulissage sont guidés de façon déplaçable mais sécurisés contra la rotation et qui sont fermement connectés avec les éléments de maintien de charge (30, 32).

12. Chariot élévateur avec un dispositif de maintien de charge selon la revendication 11, **caractérisé en ce que** les éléments de coulissage sont des barres de coulissage (46, 48), qui sont accommodés dans l'arbre creux (28) de sorte qu'ils sont sécurisés contre la rotation.

13. Chariot élévateur avec un dispositif de maintien de charge selon la revendication 11 ou 12, **caractérisé en ce que** les éléments de coulissage peuvent être actionnés par des cylindres hydrauliques ou par un entraînement électrique.

14. Chariot élévateur avec un dispositif de maintien de charge selon la revendication 12 et 13, **caractérisé en ce que** deux cylindres hydrauliques (54, 56) sont accommodés dans l'arbre creux (28) afin d'actionner les barres de coulissage (46, 48).

15. Chariot élévateur avec un dispositif de maintien de charge selon l'une quelconque des revendications 1 à 14, **caractérisé en ce que** les éléments de maintien de charge (30, 32) sont formés allongés et plats.

16. Chariot élévateur avec un dispositif de maintien de charge selon l'une quelconque des revendications 1 à 15, **caractérisé en ce que** un dispositif de contrôle est pourvu pour les entraînements des éléments de maintien de charge (30, 32).

17. Chariot élévateur avec un dispositif de maintien de charge selon la revendication 16, **caractérisé en ce que** le dispositif de contrôle présente un programme donné pour l'ajustage automatique des éléments de maintien de charge (30, 32) avant le chargement, après le chargement aussi bien que après le déchargement.

18. Chariot élévateur avec un dispositif de maintien de charge selon l'une quelconque des revendications 1 à 17, **caractérisé en ce que** un senseur est pourvu pour la détection du contacte entre une charge sur la fourche de charge (14) et les éléments de maintien de charge (30, 32) et pour générer un signal pour le dispositif de contrôle afin de finir l'ajustage des éléments de maintien de charge (30, 32) après le contact avec la charge.

19. Chariot élévateur avec un dispositif de maintien de charge selon la revendication 18, **caractérisé en ce que** un senseur de force est pourvu pour mesurer la force sur les éléments de maintien de charge (30, 32).

20. Chariot élévateur avec un dispositif de maintien de charge selon l'une quelconque des revendications 16 à 19, **caractérisé en ce que** le dispositif de contrôle est construit pour actionner les éléments de maintien de charge (30, 32) quand la chargé est reçue et une vitesse de marche donnée est dépassée au même temps.

21. Chariot élévateur avec un dispositif de maintien de charge selon l'une quelconque des revendications 16 à 20, **caractérisé en ce que** le dispositif de contrôle est construit pour limiter la vitesse de marche à une valeur maximale quand la charge est reçue et les éléments de maintien de charge ne sont pas actionnés.
